(19) Europäisches Patentamt / European Patent Office / Office européen des brevets

(11) **EP 3 509 930 B1**

(12) **EUROPÄISCHE PATENTSCHRIFT**

(45) Veröffentlichungstag und Bekanntmachung des Hinweises auf die Patenterteilung:
**08.01.2020  Patentblatt 2020/02**

(21) Anmeldenummer: **17803772.7**

(22) Anmeldetag: **07.11.2017**

(51) Int Cl.:
**B62D 6/10** *(2006.01)*  **B62D 15/02** *(2006.01)*
**B60W 40/08** *(2012.01)*

(86) Internationale Anmeldenummer:
**PCT/DE2017/200117**

(87) Internationale Veröffentlichungsnummer:
**WO 2018/161980 (13.09.2018 Gazette 2018/37)**

(54) **VORRICHTUNG UND VERFAHREN ZUR DETEKTION EINER HANDFÜHRUNG EINES LENKRADES**

DEVICE AND METHOD FOR DETECTING MANUAL GUIDANCE OF A STEERING WHEEL

DISPOSITIF ET PROCÉDÉ DE DÉTECTION D'UN GUIDAGE MANUEL D'UN VOLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2017  DE 102017203735**
**07.03.2017  RO 201700139**

(43) Veröffentlichungstag der Anmeldung:
**17.07.2019  Patentblatt 2019/29**

(73) Patentinhaber: **Continental Automotive GmbH
30165 Hannover (DE)**

(72) Erfinder:
• **RAFAILA, Razvan
90411 Nürnberg (DE)**
• **GROSU, Marian George
700574 Iasi (RO)**

(74) Vertreter: **Reuter, Andreas
Conti Temic microelectronic GmbH
Intellectual Property
Sieboldstraße 19
90411 Nürnberg (DE)**

(56) Entgegenhaltungen:
**DE-A1-102007 039 332     DE-A1-102009 028 647**

**Beschreibung**

Die Erfindung betrifft eine Vorrichtung und ein Verfahren zur Detektion einer Handführung eines Lenkrades, insbesondere für ein Fahrerassistenzsystem.

Das Lenkrad eines Fahrzeuges entwickelt sich von einem reinen Steuerelement zu einem Sicherheitsbauteil mit einem komplexen Anforderungsprofil. Allgemein versteht man unter Handerkennung (hands on/off detection) die Erkennung, ob sich die Hände des Fahrers an dem Lenkradkranz des Lenkrades befinden oder nicht. Neben Aspekten der Komforterhöhung geht mit dieser Detektion auch eine Entlastung für den Fahrzeugführer einher.

In einem Verfahren gemäß DE 10 2007 039332 A1 zur Detektion des Kontaktzustands von mindestens einer Hand eines Fahrers an der Lenkhandhabe eines Fahrzeuges wird die Lenkbewegung der Lenkhandhabe mittels mindestens eines Momentsensors und mindestens eines Winkelsensors erfasst. Die freie Lenkbewegung der Lenkhandhabe wird unter Berücksichtigung nicht-linearer Reibungseffekte anhand von experimentellen Messdaten modelliert. Der Kontaktzustand zwischen den Händen und der Lenkhandhabe wird mittels eines von einem Zustandsbeobachter geschätzten Fahrerlenkmoments detektiert.

Grundsätzlich gibt es zwei Möglichkeiten zur Schaffung eines Hands on/Hands off-Erfassungssystems. Zunächst besteht die Möglichkeit, kapazitive Sensoren an dem Lenkrad anzubringen, um festzustellen, ob die Hände des Fahrers das Lenkrad berühren bzw. greifen. Die zweite Möglichkeit besteht darin, einen Drehmomentsensor zur Messung eines Lenkraddrehmomentes des Lenkrades vorzusehen und ein von dem Sensor erzeugtes Lenkraddrehmomentsignal zu analysieren, um festzustellen, ob das Lenkrad von einem Fahrer gelenkt wird.

Das Vorsehen eines eigenen kapazitiven Sensors zur Detektion einer Handführung eines Lenkrades ist relativ aufwendig und eignet sich somit nicht für Serienproduktion von Fahrzeugen. Die Möglichkeit einer Analyse eines gemessenen Drehmomentsignals zur Erkennung einer Handführung eines Lenkrades ist relativ anspruchsvoll. Das von dem Drehmomentsensor erzeugte Signal kann relativ stark oszillieren, insbesondere sobald das Fahrzeug über Straßenschlaglöcher fährt oder sobald autonome Fahrfunktionen aktiviert werden und die Steuerung des Fahrzeuges übernehmen.

Es ist daher eine Aufgabe der vorliegenden Erfindung, eine Vorrichtung und ein Verfahren zur Detektion einer Handführung eines Lenkrades durch einen Fahrer zu schaffen, welches robust ist und eine Handführung des Lenkrades sicher detektiert.

Diese Aufgabe wird erfindungsgemäß durch eine Vorrichtung mit den in Patentanspruch 1 angegebenen Merkmalen gelöst.

Die Erfindung schafft demnach eine Vorrichtung zur Detektion einer Handführung eines Lenkrades durch einen Fahrer mit: einem Drehmomentsensor zur Messung eines Lenkrad-Drehmomentes des Lenkrades, einem Winkelgeschwindigkeitssensor zur Messung einer Winkelgeschwindigkeit einer mit dem Lenkrad verbundenen Lenkradsäule und mit einer Berechnungseinheit, die ein von dem Fahrer auf das Lenkrad ausgeübtes Fahrer-Drehmoment in Abhängigkeit des gemessenen Lenkrad-Drehmomentes und der gemessenen Winkelgeschwindigkeit berechnet und das berechnete Fahrer-Drehmoment zur Ermittlung einer Lenkwinkelkomponente filtert, welche mit einem Schwellenwert verglichen wird, um eine Handführung des Lenkrades durch den Fahrer zu erkennen.

Bei einer möglichen Ausführungsform der erfindungsgemäßen Detektionsvorrichtung weist die Berechnungseinheit ein erstes Filter auf, welches das durch den Drehmomentsensor gemessene Lenkrad-Drehmoment zur Ermittlung einer Winkelgeschwindigkeit des Drehmomentsensors filtert.

Bei einer weiteren möglichen Ausführungsform der erfindungsgemäßen Detektionsvorrichtung weist die Berechnungseinheit einen Summierer auf, der die ermittelte Winkelgeschwindigkeit des Drehmomentsensors mit der durch den Winkelgeschwindigkeitssensor gemessenen Winkelgeschwindigkeit der Lenkradsäule zur Erzeugung einer Winkelgeschwindigkeitssumme addiert.

Bei einer weiteren möglichen Ausführungsform der erfindungsgemäßen Detektionsvorrichtung weist die Berechnungseinheit ein zweites Filter auf, welches die von dem Summierer erzeugte Winkelgeschwindigkeitssumme zur Berechnung des von dem Fahrer auf das Lenkrad ausgeübten Fahrer-Drehmomentes filtert.

Bei einer weiteren möglichen Ausführungsform der erfindungsgemäßen Detektionsvorrichtung weist die Berechnungseinheit ein drittes Filter auf, welches das Fahrer-Drehmoment zur Ermittlung einer Lenkwinkelkomponente filtert.

Bei einer weiteren möglichen Ausführungsform der erfindungsgemäßen Detektionsvorrichtung weist die Berechnungseinheit einen Komparator auf, der die ermittelte Lenkwinkelkomponente mit dem Schwellenwert zur Erkennung einer Handführung des Lenkrades durch den Fahrer vergleicht.

Bei einer möglichen Ausführungsform der erfindungsgemäßen Detektionsvorrichtung sind die Filter der Berechnungseinheit Tiefpassfilter.

Bei einer weiteren möglichen Ausführungsform der erfindungsgemäßen Detektionsvorrichtung setzt der Komparator der Berechnungseinheit ein Flag, welches angibt, ob das Lenkrad durch den Fahrer handgeführt wird oder nicht.

Bei einer weiteren möglichen Ausführungsform der erfindungsgemäßen Detektionsvorrichtung wird das durch den Komparator gesetzte Flag durch eine Steuereinheit zur Fahrerwarnung und/oder zur Unterbindung automatisierter Fahrzeuginterventionen ausgewertet.

Die Erfindung schafft ferner gemäß einem weiteren Aspekt ein Verfahren zur Detektion einer Handführung eines Lenkrades durch einen Fahrer mit den in Patentanspruch 10 angegebenen Merkmalen.

Die Erfindung schafft demnach ein Verfahren zum Detektieren einer Handführung eines Lenkrades durch einen Fahrer mit den folgenden Schritten:

Messen eines Lenkrad-Drehmomentes des Lenkrades;

Messen einer Winkelgeschwindigkeit einer mit dem Lenkrad verbundenen Lenkradsäule;

Berechnen eines von dem Fahrer auf das Lenkrad ausgeübten Fahrer-Drehmomentes in Abhängigkeit des gemessenen Drehmomentes und der gemessenen Winkelgeschwindigkeit der mit dem Lenkrad verbundenen Lenkradsäule;

Filtern des berechneten Fahrer-Drehmomentes zum Ermitteln einer durch das Fahrer-Drehmoment hervorgerufenen Lenkwinkelkomponente und

Vergleichen der ermittelten Lenkwinkelkomponente mit einem Schwellenwert zum Erkennen, ob das Lenkrad durch den Fahrer handgeführt wird.

Bei einer möglichen Ausführungsform des erfindungsgemäßen Verfahrens wird das durch den Drehmomentsensor gemessene Lenkrad-Drehmoment zur Ermittlung einer Winkelgeschwindigkeit des Drehmomentsensors gefiltert.

Bei einer weiteren möglichen Ausführungsform des erfindungsgemäßen Verfahrens wird die ermittelte Winkelgeschwindigkeit des Drehmomentsensors mit der gemessenen Winkelgeschwindigkeit der mit dem Lenkrad verbundenen Lenkradsäule zur Erzeugung einer Winkelgeschwindigkeitssumme addiert.

Bei einer weiteren möglichen Ausführungsform des erfindungsgemäßen Verfahrens wird die erzeugte Winkelgeschwindigkeitssumme zur Berechnung des von dem Fahrer auf das Lenkrad ausgeübten Fahrer-Drehmomentes gefiltert.

Bei einer weiteren möglichen Ausführungsform des erfindungsgemäßen Verfahrens wird das Fahrer-Drehmoment zur Ermittlung einer Lenkwinkelkomponente gefiltert.

Bei einer weiteren möglichen Ausführungsform des erfindungsgemäßen Verfahrens wird die ermittelte Lenkwinkelkomponente mit einem Schwellenwert zur Erkennung einer Handführung des Lenkrades durch den Fahrer verglichen.

Im Weiteren werden mögliche Ausführungsformen der erfindungsgemäßen Detektionsvorrichtung und des erfindungsgemäßen Detektionsverfahrens unter Bezugnahme auf die beigefügten Figuren näher erläutert.

Es zeigen:

Figur 1     ein Blockdiagramm zur Darstellung eines Ausführungsbeispiels einer erfindungsgemäßen Detektionsvorrichtung;

Figur 2     ein weiteres Blockschaltbild zur Darstellung eines Ausführungsbeispiels der erfindungsgemäßen Detektionsvorrichtung;

Figur 3     ein Ablaufdiagramm zur Darstellung eines Ausführungsbeispiels eines erfindungsgemäßen Detektionsverfahrens.

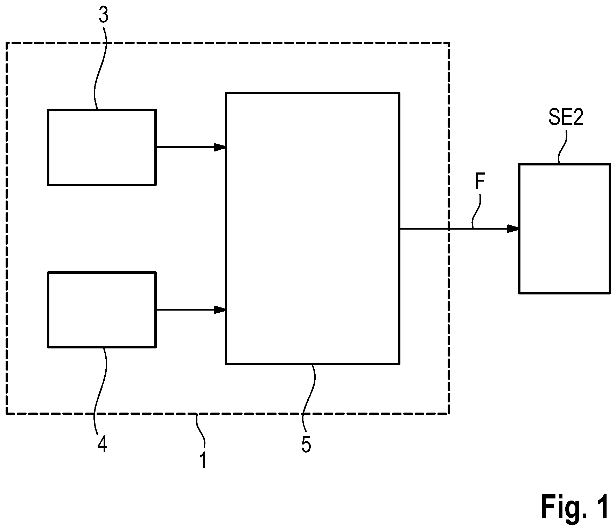

Das in Figur 1 dargestellte Blockschaltbild stellt ein Ausführungsbeispiel einer Vorrichtung 1 zur Detektion einer Handführung eines Lenkrades durch einen Fahrer dar. Die Detektionsvorrichtung 1 kann ausgangsseitig mit einer Steuereinheit 2 eines Fahrzeuges verbunden sein.

Die Detektionsvorrichtung 1 umfasst in dem dargestellten Ausführungsbeispiel mindestens einen Drehmomentsensor 3 zur Messung eines Lenk-Drehmomentes des Lenkrades des Fahrzeuges. Weiterhin umfasst die Detektionsvorrichtung 1 mindestens einen Winkelgeschwindigkeitssensor 4 zur Messung einer Winkelgeschwindigkeit einer mit dem Lenkrad verbundenen Lenkradsäule. Die beiden Sensoren 3, 4 sind an eine Berechnungseinheit 5 der Detektionsvorrichtung 1 angeschlossen. Die Berechnungseinheit 5 berechnet ein von dem Fahrer auf das Lenkrad ausgeübtes Fahrer-Drehmoment in Abhängigkeit des von dem Drehmomentsensor 3 gemessenen Lenkrad-Drehmomentes und in Abhängigkeit der von dem Winkelgeschwindigkeitssensor 4 gemessenen Winkelgeschwindigkeit. Dieses berechnete Fahrer-Drehmoment wird anschließend durch eine Einheit der Berechnungseinheit 5 zur Ermittlung einer Lenkwinkelkomponente gefiltert, welche mit einem Schwellenwert beispielsweise durch einen Komparator der Berechnungseinheit 5 verglichen wird, um eine Handführung des Lenkrades durch den Fahrer zu erkennen.

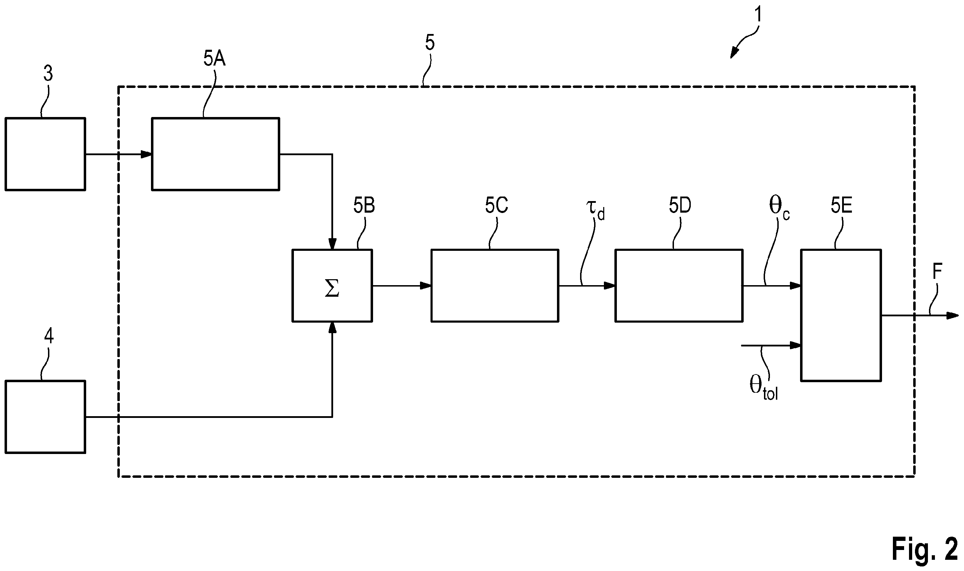

Das in Figur 2 dargestellte Blockschaltbild zeigt ein Ausführungsbeispiel einer in der Detektionsvorrichtung 1 enthaltenen Berechnungseinheit 5. Wie man in Figur 2 erkennen kann, enthält die Berechnungseinheit 5 ein erstes Filter 5A, welches das durch den Drehmomentsensor 3 gemessene Lenkrad-Drehmoment zur Ermittlung einer Winkelgeschwindigkeit des Drehmomentsensors 3 filtert. Bei diesem ersten Filter 5A kann es sich um ein Tiefpassfilter handeln.

Die Berechnungseinheit 5 weist ferner einen Summierer 5B auf, der die ermittelte Winkelgeschwindigkeit des Drehmomentsensors 3 mit der durch den Winkelgeschwindigkeitssensor 4 gemessenen Winkelgeschwindigkeit der Lenkradsäule zur Erzeugung einer Winkelgeschwindigkeitssumme addiert.

Die Berechnungseinheit 5 enthält ferner ein zweites Filter 5C, welches die von dem Summierer 5B erzeugte Winkelgeschwindigkeitssumme zur Berechnung des von dem Fahrer auf das Lenkrad ausgeübten Fahrerdrehmomentes filtert. Das zweite Filter 5C kann ebenfalls ein Tiefpassfilter sein. Das Ausgangssignal des zweiten Filters 5C ist das von dem Fahrer auf das Lenkrad ausgeübte Fahrer-Drehmoment $T_d$. Dieses von dem Fahrer auf das Lenkrad ausgeübte Fahrer-Drehmoment $T_d$ wird durch ein drittes Filter 5D seinerseits gefiltert, um eine Lenkwinkelkomponente zu ermitteln. Das dritte Filter 5D kann ebenfalls ein Tiefpassfilter sein.

Weiterhin enthält die Berechnungseinheit 5 in dem dargestellten Ausführungsbeispiel einen Komparator 5E, der die ermittelte Lenkwinkelkomponente $\theta_c^T$ mit einem Schwellenwert $\theta_{tol}$ zur Erkennung einer Handführung des Lenkrades durch den Fahrer vergleicht. Bei einer möglichen Ausführungsform setzt der Komparator 5E der Berechnungseinheit 5 ein Flag F, welches angibt, ob das Lenkrad durch den Fahrer handgeführt wird oder nicht. Das durch den Komparator 5E der Berechnungseinheit 5 gesetzte Flag F kann bei einer möglichen Ausführungsform einer Steuereinheit 2 zugeführt werden, welche das empfangene Flag zur Durchführung einer Fahrerwarnung und/oder zur Unterbindung automatisierter Fahrzeuginterventionen auswertet. Diese automatisierten Fahrzeuginterventionen sind beispielsweise eine Steuerung oder eine Beschleunigung des Fahrzeuges. Diese können in Abhängigkeit des erzeugten Flags F aktiviert oder deaktiviert werden.

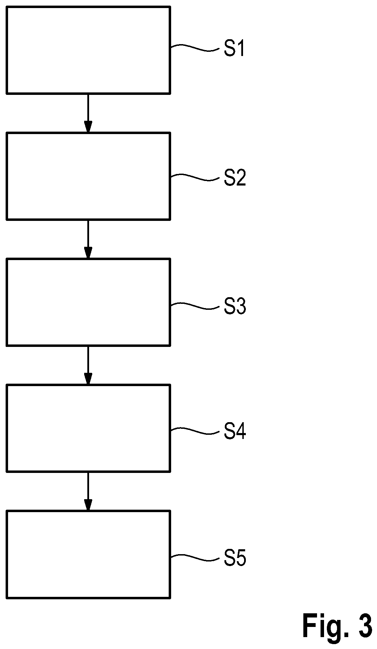

Figur 3 zeigt ein Ablaufdiagramm zur Darstellung eines Ausführungsbeispiels eines erfindungsgemäßen Verfahrens zur Detektion einer Handführung eines Lenkrades durch einen Fahrer. Bei dem in Figur 3 dargestellten Ausführungsbeispiel umfasst das Detektionsverfahren gemäß der Erfindung im Wesentlichen fünf Hauptschritte.

In einem ersten Schritt S1 wird ein Lenkrad-Drehmoment des Lenkrades gemessen.

In einem weiteren Schritt S2 wird eine Winkelgeschwindigkeit einer mit dem Lenkrad verbundenen Lenkradsäule gemessen.

In einem dritten Schritt S3 wird ein von dem Fahrer auf das Lenkrad ausgeübtes Fahrer-Drehmoment $T_d$ in Abhängigkeit des gemessenen Drehmomentes $T_s$ und der gemessenen Winkelgeschwindigkeit $\omega_c$ der mit dem Lenkrad verbundenen Lenkradsäule berechnet.

In einem weiteren Schritt S4 wird das berechnete Fahrer-Drehmoment $T_d$ zum Ermitteln einer durch das Fahrer-Drehmoment $T_d$ hervorgerufenen Lenkwinkelkomponente $\theta_c^T$ gefiltert.

In einem weiteren Schritt S5 wird die im Schritt S4 ermittelte Lenkwinkelkomponente $\theta_c^T$ mit einem Schwellenwert $\theta_{tol}$ verglichen, um zu erkennen, ob das Lenkrad durch den Fahrer handgeführt wird.

Die Messung des Lenkrad-Drehmomentes $T_s$ des Lenkrades im Schritt S1 kann beispielsweise mit einem dafür vorgesehenen Drehmomentsensor 3 erfolgen, wie er in den Figuren 1, 2 dargestellt ist.

Die Messung der Winkelgeschwindigkeit $\omega_c$ einer mit dem Lenkrad verbundenen Lenkradsäule im Schritt S2 kann ebenfalls mit einem entsprechenden Sensor, nämlich einem Winkelgeschwindigkeitssensor 4, wie er in den Figuren 1, 2 dargestellt ist, erfolgen.

Die Schritte S3, S4, S5 können durch eine Berechnungseinheit 5 durchgeführt werden, wie sie in dem Ausführungsbeispiel gemäß Figur 2 dargestellt ist.

Das durch den Drehmomentsensor 3 im ersten Schritt S1 gemessene Lenkrad-Drehmoment $T_s$ kann bei einer möglichen Ausführungsform zur Ermittlung einer Winkelgeschwindigkeit des Drehmomentsensors 3 zunächst gefiltert werden. Dies geschieht beispielsweise durch das in Figur 2 dargestellte erste Filter 5A der Berechnungseinheit 5. Anschließend wird die ermittelte Winkelgeschwindigkeit des Drehmomentsensors 3 mit der im Schritt S2 gemessenen Winkelgeschwindigkeit $\omega_c$ der mit dem Lenkrad verbundenen Lenkradsäule zur Erzeugung einer Winkelgeschwindigkeitssumme addiert. Dies geschieht beispielsweise mit dem in Figur 2 dargestellten Summierer 5B der Berechnungseinheit 5. Die von dem Summierer erzeugte Winkelgeschwindigkeitssumme kann anschließend zur Berechnung des von dem Fahrer auf das Lenkrad ausgeübten Fahrer-Drehmomentes $T_s$ gefiltert werden. Dies erfolgt beispielsweise mit dem in Figur 2 dargestellten zweiten Filter 5C der Berechnungseinheit. Anschließend kann das erzeugte Fahrer-Drehmoment zur Ermittlung einer Lenkwinkelkomponente $\theta_c^T$ gefiltert werden. Dies erfolgt beispielsweise mit dem in Figur 2 dargestellten dritten Filter 5D. Schließlich wird im Schritt S5 die ermittelte Lenkwinkelkomponente $\theta_c^T$ mit einem vorgegebenen Schwellenwert $\theta_{tol}$ zur Erkennung einer Handführung des Lenkrades durch den Fahrer im Schritt S5 verglichen.

Mit dem erfindungsgemäßen Verfahren erfolgt eine Detektion einer Handführung eines Lenkrades basierend auf einem von dem Fahrer auf das Lenkrad ausgeübten Fahrer-Drehmoment. Dies kann unter Verwendung einer Transferfunktion bzw. Übertragungsfunktion geschehen, welche die Systemdynamiken beschreibt. Das erfindungsgemäße Detektionsverfahren kann bei einer möglichen Ausführungsform mittels eines durch die Berechnungseinheit 5 ausgeführten Algorithmus erfolgen. Dieser Detektionsalgorithmus kann bei einer möglichen Ausführungsform wie folgt implementiert werden.

Messen des Lenkrad-Drehmoments $T_s$ mit Drehmomentsensor;

Messen der Winkelgeschwindigkeit $\omega_c$ einer mit dem Lenkrad verbundenen Lenkradsäule mit einem Winkelgeschwindigkeitssensor;

Anwenden einer Übertragungsfunktion, um eine Schätzung für das auf das Lenkrad ausgeübte Fahrer-Drehmoment $T_d$ zu erhalten;

Filtern des geschätzten Fahrer-Drehmoments $T_d$ mit einer zweiten Übertragungsfunktion, um eine Lenkwinkelkomponente $\theta_c^T$ zu erhalten;

falls (if) $|\theta_c^T| \leq \theta_{tol}$, dann hand off-Detektion;

ansonsten (else) hands on erfasst.

End if.

In dem oben angegebenen Implementierungsbeispiel des Algorithmus stellt der Schwellenwert $\theta_{tol}$ einen Toleranzparameter dar. Dieser ist vorgesehen, um die bei der Messung der numerischen Kalkulation auftretenden Rauschen zu berücksichtigen. Im Idealfall beträgt dieser Toleranzparameter $\theta_{tol}$ = 0 [*rad*]. In der praktischen Implementierung kann dieser Toleranzparameter $\theta_{tol}$ abhängig von der gewünschten Detektionsgenauigkeit eingestellt werden.

Die Berechnungseinheit 5 umfasst bei der in Fig. 2 dargestellten Ausführungsform drei Filter 5A, 5C, 5D. Diese Filter sind vorzugsweise Tiefpassfilter. Bei einer möglichen Ausführungsform handelt es sich um passive digitale Tiefpassfilter.

Das erfindungsgemäße Handdetektionsverfahren beruht auf dem dynamischen Verhalten eines elektrischen Lenksystems.

Dieses dynamische Verhalten kann wie folgt dargestellt werden:

$$J_c\ddot{\theta}_c = -K_c\theta_c - B_c\dot{\theta}_c + K_c\frac{\theta_m}{N} - F_c sign(\dot{\theta}_c) + T_d \qquad (1)$$

$$J_{eq}\ddot{\theta}_m = K_c\frac{\theta_c}{N} - K_{eq}\theta_m - B_{eq}\dot{\theta}_m + K_t i_m - F_m sign(\dot{\theta}_m) - \frac{R_p}{N}F_r \qquad , \qquad (2)$$

wobei

$\theta_c$ der Lenkradsäulenwinkel,
$\theta_m$ der Winkel des elektrischen Motors,
$i_m$ der elektrische Motorstrom,
$F_r$ die Reaktionskraft der Straße, welche auf das Steuersystem wirkt, und
$T_d$ das von dem Fahrer ausgeübte Drehmoment darstellt.

Die in den Gleichungen (1), (2) dargestellten Parameter sind wie folgt:

$J_c$ ist das Trägheitsmoment der Lenksäule,
$B_c$ ist der Dämpfungskoeffizient der Lenksäule,
$K_c$ ist die Steifheit der Lenksäule,
$F_c$ ist die Reibung der Lenksäule,
$N$ ist das Übersetzungsverhältnis des Elektromotors,
$R_p$ ist der Lenksäulenradius,
$K_t$ ist eine Drehmomentkonstante des Elektromotors,
$J_{eq}$ ist die äquivalente Trägheit des unteren Teils des EPS-Systems, die sich aus der Trägheit des Elektromotors und der Steuersystemmasse zusammensetzt,
$B_{eq}$ ist der äquivalente Dämpfungsfaktor des unteren Teils des EPS-Systems, welches sich aus der viskosen Dämpfung des Elektromotors und der viskosen Dämpfung des Lenksystems zusammensetzt,

$K_{eq}$ ist die äquivalente Steifheit des unteren Teils des EPS-Systems, die sich aus der Federungsrate des Reifens und der Steifheit der Lenksäule zusammensetzt und

$F_m$ ist der Motorreibungskoeffizient.

Die obige Gleichung (1) beschreibt die Dynamik des oberen Teils der Lenksäule, welche das Lenkrad und den Lenksensor aufweist. Die zweite Gleichung (2) kombiniert die Dynamiken des Motors und des Racks. Unter Vernachlässigen der Säulenreibungskomponente kann die Gleichung (1) wie folgt umgeschrieben werden:

$$J_c\ddot{\theta}_c + B_c\dot{\theta}_c + K_c\theta_c = K_c\frac{\theta_m}{N} + T_d \qquad (3)$$

Unter Anwendung einer Laplace-Transformation kann die Gleichung (3) wie folgt angegeben werden:

$$J_c s^2\theta_c(s) + B_c s\theta_c(s) + K_c\theta_c(s) = K_c\frac{\theta_{m(s)}}{N} + T_d(s) \qquad (4)$$

Ausgehend von Gleichung (4) können die Dynamiken der Lenksäule mit folgender Übertragungsfunktion angegeben werden:

$$\theta_c(s) = \frac{K_c/N}{J_c s^2 + B_c s + K_c}\theta_m(s) + \frac{1}{J_c s^2 + B_c s + K_c}T_d(s) \quad , \qquad (5)$$

wobei der Lenksäulenwinkel $\theta_c$ als Ausgang angesehen wird, während der Motorwinkel $\theta_m$ und das von dem Fahrer aufgebrachte Drehmoment $T_d$ die beiden Eingänge darstellen und einen Einfluss auf den Lenksäulenwinkel $\theta_c$ haben.

Ausgehend von Gleichung (5) können zwei unterschiedliche Winkelkomponenten betrachtet werden. Eine Winkelkomponente wird durch den Motorwinkel $\theta_m$ generiert, d.h.:

$$\theta_c^m(s) \overset{\text{def}}{=} \frac{K_c/N}{J_c s^2 + B_c s + K_c}\theta_m(s) \qquad (6)$$

und eine andere Winkelkomponente wird durch das Fahrer-Drehmoment $T_d$ generiert:

$$\theta_c^T(s) \overset{\text{def}}{=} \frac{1}{J_c s^2 + B_c s + K_c}T_d(s) \qquad (7)$$

Wie man an Gleichung (2) erkennen kann, hängt der Motorwinkel von zwei Eingängen ab, nämlich dem Motorstrom $i_m$, welcher von dem Lenkcontroller benutzt wird, um das Drehmoment zu generieren, welches für die Fahrerlenkunterstützung oder für autonomes Fahren erforderlich ist, und die Straßen- bzw. Untergrundreaktionskraft $F_r$, welche diejenige Kraft darstellt, welche durch den Kontakt zwischen der Straße und den Rädern erzeugt wird. Wenn das Fahrzeug automatisch gesteuert wird oder die Steuerräder über Straßenschlaglöcher rollen, wird der Motorwinkel beeinflusst. Dieser addiert die Winkelkomponente $\theta_c^T$ in dem Lenkradwinkel $\theta_c$ und beeinflusst nicht die Winkelkomponente $\theta_c^T$. Auf diese Weise beeinflussen Schlaglöcher oder Unebenheiten in der Straße sowie automatische Lenkmanöver den Lenkradwinkel durch den Motorwinkel $\theta_m$.

Aufgrund der Gleichungen (5), (6) und (7) ist es möglich, den Einfluss bzw. die Auswirkungen zu entkoppeln, welche in der Lenk-Drehmomentmessung erkennbar werden, wenn automatische Lenkmanöver oder Reaktionskräfte der Straße vorhanden sind, indem man lediglich die Winkelkomponente analysiert, die durch das Motordrehmoment $\theta_c^T$ induziert bzw. hervorgerufen wird.

Wie aus Gleichung (7) hervorgeht, kann man schlussfolgern, dass, sobald das von dem Fahrer ausgeübte Drehmoment $0[N_m]$, wird, der Fahrer seine Hände von dem Lenkrad entfernt hat. Indem man die Auswirkung des Fahrer-Drehmoments mit dem Lenkradwinkel $\theta_c$ analysiert, d.h. die Amplitude der Winkelkomponente $\theta_c^T$ , ist es möglich, zu detektieren bzw. festzustellen, ob die Hände des Fahrer sich auf dem Lenkrad befinden oder nicht. Sobald man dieses aktuelle bzw. momentane von dem Fahrer ausgeübte Drehmoment $T_d$ erhält, ist es möglich, eine zuverlässige Handführungsdetektion vorzunehmen.

Um das von dem Fahrer auf das Lenkrad ausgeübte Fahrer-Drehmoment $T_d$ zu ermitteln bzw. zu schätzen, kann das in der Gleichung (1) angegebene Modell benutzt werden. Unter Vernachlässigung der nicht-linearen Reibungskomponente kann die Gleichung wie folgt angegeben werden:

$$J_c\ddot{\theta}_c + B_c\dot{\theta}_c = -K_c\left(\theta_c - \frac{\theta_m}{N}\right) + T_d \tag{8}$$

Der erste Term auf der rechten Seite der Gleichung stellt das Drehmoment dar, welches durch den Drehmomentsensor 3 gemessen wird. Dies kann im Folgenden wie folgt geschrieben werden:

$$T_s = K_c(\theta_c - \frac{\theta_m}{N}) \tag{9}$$

Demzufolge kann die Gleichung (8) wie folgt umgeschrieben werden:

$$J_c\ddot{\theta}_c + B_c\dot{\theta}_c = T_d - T_s \tag{10}$$

Unter Anwendung einer Laplace-Transformation und unter Berücksichtigung, dass $\dot{\theta}_c = \omega_c$, kann eine Transferfunktion wie folgt ermittelt werden:

$$\omega_c(s) = \frac{1}{J_c s + B_c} T_d(s) - \frac{1}{J_c s + B_c} T_s(s) \tag{11}$$

Das aktuelle bzw. momentane Fahrer-Drehmoment $T_d$ kann dann von Gleichung (11) wie folgt abgeleitet werden:

$$\left[\omega_c(s) + \frac{1}{J_c s + B_c} T_s(s)\right] = \frac{1}{J_c s + B_c} T_d(s) \tag{12}$$

Um die Dynamiken zu eliminieren, welche durch die Transferfunktion auf der rechten Seite der Gleichung (12) eingeführt werden, kann die Gleichung (12) mit der Inversen dieser Transferfunktion multipliziert werden. Unter Verwendung eines Tiefpassfilters kann das Fahrer-Drehmoment $T_d$ wie folgt angegeben werden:

$$\frac{(J_c s + B_c)(b_m s^m + b_{m-1}s^{m-1} + \cdots + b_1 s + 1)}{a_n s^n + a_{n-1}s^{n-1} + \cdots + a_1 s + 1}\left[\omega_c(s) + \frac{1}{J_c s + B_c} T_s(s)\right] = T_d(s) \quad , \tag{13}$$

wobei $a_1, \ldots a_n, b_1, \ldots b_m \in \mathbb{R}$ reelle Koeffizienten des betreffenden Filters sind und wobei die Ordnung des Filters durch $n, m \in \mathbb{N}$ angegeben ist, wobei $n \geq m + 1$.

Die Berechnungseinheit 5 erzeugt ein Flag F, welches angibt, ob der Fahrer seine Hände an dem Lenkrad hat oder ob er seine Hände von dem Lenkrad abgenommen hat. Beispielsweise gibt ein Flag F = 0 an, dass sich die Hände an dem Lenkrad befinden, während ein Flag F = 1 angibt, dass die Hände von dem Lenkrad entfernt wurden. Das in Gleichung (13) angegebene Filter kann beispielsweise als einfaches Tiefpassfilter zweiter Ordnung $\frac{1}{(0.07s+1)(0.07s+1)}$ implementiert werden.

Das erfindungsgemäße Detektionsverfahren basiert auf einem genauen Modell zur Schätzung bzw. Berechnung des aktuellen auf das Lenkrad ausgeübten Fahrer-Drehmoments. Durch Transformation des Fahrer-Drehmomentsignals in eine Winkelkomponente des Lenkrades kann eine einfache Quantifizierung und Abstimmung bzw. Anpassung erfolgen. Das erfindungsgemäße Verfahren benötigt keine komplexe Entscheidungslogik, um festzustellen, ob sich die Hände des Fahrers an dem Lenkrad befinden oder nicht. Das erfindungsgemäße Verfahren ist äußerst robust gegenüber externen Einflüssen, insbesondere gegenüber denjenigen Einflüssen, die auf die Messung des Lenkdrehmomentsensors wirken. Das erfindungsgemäße Verfahren benötigt lediglich zwei Messsignale, nämlich ein gemessenes Lenkrad-Drehmoment des Lenkrades und eine gemessene Winkelgeschwindigkeit einer mit dem Lenkrad verbundenen Lenkradsäule. Diese beiden Messsignale sind bei den meisten Fahrzeugsystemen bereits vorhanden. Daher bietet das erfindungsgemäße Verfahren und die erfindungsgemäße Vorrichtung zur Detektion einer Handführung eines Lenkrads den besonderen Vorteil, dass keine weiteren Sensoren vorgesehen werden müssen, um die gewünschte Detektion einer Handführung eines Lenkrades durchführen zu können. Daher ist der technische Aufwand zur Implementierung dieses erfindungsgemäßen Detektionsverfahrens und der erfindungsgemäßen Detektionsvorrichtung 1 relativ gering.

Das von der Berechnungseinheit 5 der Detektionsvorrichtung 1 erzeugte Flag kann weiteren Steuereinheiten eines Fahrerassistenzsystems zugeführt werden. In Abhängigkeit von dem Flag kann beispielsweise eine Fahrerwarnung des Fahrers erfolgen. Weiterhin können bestimmte automatisierte Fahrzeuginterventionen in Abhängigkeit des gesetzten Flags automatisch unterbunden werden.

**Patentansprüche**

1. Vorrichtung (1) zur Detektion einer Handführung eines Lenkrades durch einen Fahrer mit:

(a) einem Drehmomentsensor (3) zur Messung eines Lenkrad-Drehmomentes ($T_s$) des Lenkrades;
(b) einem Winkelgeschwindigkeitssensor (4) zur Messung einer Winkelgeschwindigkeit ($\omega_c$) einer mit dem Lenkrad verbundenen Lenkradsäule; und mit
(c) einer Berechnungseinheit (5), die ein von dem Fahrer auf das Lenkrad ausgeübtes Fahrer-Drehmoment ($T_d$) in Abhängigkeit des gemessenen Lenkrad-Drehmomentes ($T_s$) und der gemessenen Winkelgeschwindig-keit ($\omega_c$) berechnet,

**dadurch gekennzeichnet, dass** die Berechnungseinheit (5) das berechnete Fahrer-Drehmoment ($T_d$) zur Ermitt-lung einer Lenkwinkelkomponente $\left(\theta_c^T\right)$ filtert, welche mit einem Schwellenwert ($\theta_{tol}$) verglichen wird, um eine Handführung des Lenkrades durch den Fahrer zu erkennen.

2. Vorrichtung nach Anspruch 1,
wobei die Berechnungseinheit (5) ein erstes Filter (5A) aufweist, welches das durch den Drehmomentsensor (3) gemessene Lenkrad-Drehmoment ($T_s$) zur Ermittlung einer Winkelgeschwindigkeit des Drehmomentsensors (3) filtert.

3. Vorrichtung nach Anspruch 2,
wobei die Berechnungseinheit (5) einen Summierer (5B) aufweist, der die ermittelte Winkelgeschwindigkeit des Drehmomentsensors (3) mit der durch den Winkelgeschwindigkeitssensor (4) gemessenen Winkelgeschwindigkeit ($\omega_c$) der Lenkradsäule zur Erzeugung einer Winkelgeschwindigkeitssumme addiert.

4. Vorrichtung nach Anspruch 3,
wobei die Berechnungseinheit (5) ein zweites Filter (5C) aufweist, welches die von dem Summierer (5B) erzeugte Winkelgeschwindigkeitssumme zur Berechnung des von dem Fahrer auf das Lenkrad ausgeübten Fahrer-Drehmomentes ($T_d$) filtert.

5. Vorrichtung nach Anspruch 4,
wobei die Berechnungseinheit (5) ein drittes Filter (5D) aufweist, welches das Fahrer-Drehmoment ($T_d$) zur Ermittlung einer Lenkwinkelkomponente $\left(\theta_c^T\right)$ filtert.

6. Vorrichtung nach Anspruch 5,
wobei die Berechnungseinheit (5) einen Komparator (5E) aufweist, der die ermittelte Lenkwinkelkomponente $\left(\theta_c^T\right)$ mit dem Schwellenwert ($\theta_{tol}$) zur Erkennung einer Handführung des Lenkrades durch den Fahrer vergleicht.

**7.** Vorrichtung nach einem der vorangehenden Ansprüche bis 6,
wobei die Filter (5A, 5C, 5D) der Berechnungseinheit (5) Tiefpassfilter sind.

**8.** Vorrichtung nach Anspruch 6,
wobei der Komparator (5E) der Berechnungseinheit (5) ein Flag (F) setzt, welches angibt, ob das Lenkrad durch den Fahrer handgeführt wird oder nicht.

**9.** Vorrichtung nach Anspruch 8,
wobei das durch den Komparator (5E) gesetzte Flag (F) durch eine Steuereinheit zur Fahrerwarnung und/oder zur Unterbindung automatisierter Fahrzeuginterventionen ausgewertet wird.

**10.** Verfahren zum Detektieren einer Handführung eines Lenkrades durch einen Fahrer mit den folgenden Schritten:

(a) Messen (S1) eines Lenkrad-Drehmomentes ($T_s$) des Lenkrades;
(b) Messen (S2) einer Winkelgeschwindigkeit ($\omega_c$) einer mit dem Lenkrad verbundenen Lenkradsäule;
(c) Berechnen (S3) eines von dem Fahrer auf das Lenkrad ausgeübten Fahrer-Drehmomentes ($T_d$) in Abhängigkeit des gemessenen Drehmomentes ($T_s$) und der gemessenen Winkelgeschwindigkeit ($\omega_c$) der mit dem Lenkrad verbundenen Lenkradsäule;

**gekennzeichnet durch** die Schritte:

(d) Filtern (S4) des berechneten Fahrer-Drehmomentes ($T_d$) zum Ermitteln einer durch das Fahrer-Drehmoment ($T_d$) hervorgerufenen Lenkwinkelkomponente $\left(\theta_c^T\right)$; und

(e) Vergleichen (S5) der ermittelten Lenkwinkelkomponente $\left(\theta_c^T\right)$ mit einem Schwellenwert zum Erkennen, ob das Lenkrad durch den Fahrer handgeführt wird.

**11.** Verfahren nach Anspruch 10,
wobei das durch einen Drehmomentsensor (3) gemessene Lenkrad-Drehmoment ($T_s$) zur Ermittlung einer Winkelgeschwindigkeit des Drehmomentsensors (3) gefiltert wird.

**12.** Verfahren nach Anspruch 11,
wobei die ermittelte Winkelgeschwindigkeit des Drehmomentsensors (3) mit der gemessenen Winkelgeschwindigkeit ($\omega_c$) der mit dem Lenkrad verbundenen Lenkradsäule zur Erzeugung einer Winkelgeschwindigkeitssumme addiert wird.

**13.** Verfahren nach Anspruch 12,
wobei die erzeugte Winkelgeschwindigkeitssumme zur Berechnung des von dem Fahrer auf das Lenkrad ausgeübten Fahrer-Drehmomentes ($T_d$) gefiltert wird.

**14.** Verfahren nach Anspruch 13,
wobei das Fahrer-Drehmoment ($T_d$) zur Ermittlung einer Lenkwinkelkomponente $\left(\theta_c^T\right)$ gefiltert wird.

**15.** Verfahren nach Anspruch 14,
wobei die ermittelte Lenkwinkelkomponente $\left(\theta_c^T\right)$ mit einem Schwellenwert ($\theta_{tol}$) zur Erkennung einer Handführung des Lenkrades durch den Fahrer verglichen wird.

**Claims**

**1.** A device (1) for detecting manual guidance of a steering wheel by a driver, having:

(a) a torque sensor (3) for measuring a steering wheel torque ($T_s$) of the steering wheel;
(b) an angular speed sensor (4) for measuring an angular speed ($\omega_c$) of a steering wheel column which is connected to the steering wheel; and having
(c) a calculation unit (5) which calculates a driver torque ($T_d$) applied to the steering wheel by the driver, as a function of the measured steering wheel torque ($T_s$) and the measured angular speed ($\omega_c$),

**characterized in that** the calculation unit (5) filters the calculated driver torque ($T_d$) in order to determine a steering angle component $(\theta_C^T)$ which is compared with a threshold value ($\theta_{tol}$) in order to detect manual guidance of the steering wheel by the driver.

2. The device according to Claim 1,
   wherein the calculation unit (5) has a first filter (5A) which filters the steering wheel torque ($T_s$) measured by the torque sensor (3) in order to determine an angular speed of the torque sensor (3).

3. The device according to Claim 2,
   wherein the calculation unit (5) has an adder (5B) which adds the determined angular speed of the torque sensor (3) to the angular speed ($\omega_c$) of the steering wheel column measured by the angular speed sensor (4) in order to produce an angular speed total.

4. The device according to Claim 3,
   wherein the calculation unit (5) has a second filter (5C) which filters the angular speed total produced by the adder (5B) in order to calculate the driver torque ($T_d$) applied to the steering wheel by the driver.

5. The device according to Claim 4,
   wherein the calculation unit (5) has a third filter (5D) which filters the driver torque ($T_d$) in order to determine a steering angle component $(\theta_C^T)$.

6. The device according to Claim 5,
   wherein the calculation unit (5) has a comparator (5E) which compares the determined steering angle component $(\theta_C^T)$ with the threshold value ($\theta_{tol}$) in order to identify manual guidance of the steering wheel by the driver.

7. The device according to any one of the preceding Claims 4 to 6,
   wherein the filters (5A, 5C, 5D) of the calculation unit (5) are low-pass filters.

8. The device according to Claim 6,
   wherein the comparator (5E) of the calculation unit (5) sets a flag (F) which indicates whether the steering wheel is being manually guided by the driver or not.

9. The device according to Claim 8,
   wherein the flag (F) set by the comparator (5E) is evaluated by a control unit for warning the driver and/or for preventing automated interventions by the vehicle.

10. A method for detecting manual guidance of a steering wheel by a driver, having the following steps:

    (a) measuring (S1) of a steering wheel torque ($T_s$) of the steering wheel;
    (b) measuring (S2) of an angular speed ($\omega_c$) of a steering wheel column which is connected to the steering wheel;
    (c) calculation (S3) of a driver torque ($T_d$) applied to the steering wheel by the driver, as a function of the measured steering torque ($T_s$) and the measured angular speed ($\omega_c$) of the steering wheel column which is connected to the steering wheel;

    **characterized by** the steps:

    (d) filtering (S4) of the calculated driver torque ($T_d$) in order to determine a steering angle component $(\theta_C^T)$ which is generated by the driver torque ($T_d$); and

    (e) comparing (S5) of the determined steering angle component $(\theta_C^T)$ with a threshold value in order to identify whether the steering wheel is being manually guided by the driver.

**11.** The method according to Claim 10,
wherein the steering wheel torque ($T_s$) measured by a torque sensor (3) is filtered in order to determine an angular speed of the torque sensor (3).

**12.** The method according to Claim 11,
wherein the determined angular speed of the torque sensor (3) is added to the measured angular speed ($\omega_c$) of the steering wheel column which is connected to the steering wheel in order to produce an angular speed total.

**13.** The method according to Claim 12,
wherein the produced angular speed total is filtered in order to calculate the driver torque ($T_d$) applied to the steering wheel by the driver.

**14.** The method according to Claim 13,
wherein the driver torque ($T_d$) is filtered in order to determine a steering angle component $(\theta_C^T)$.

**15.** The method according to Claim 14,
wherein the determined steering angle component $(\theta_C^T)$ is compared with a threshold value ($\theta_{tol}$) in order to identify manual guidance of the steering wheel by the driver.


**Revendications**

**1.** Dispositif (1) destiné à détecter un guidage manuel d'un volant par un conducteur, ayant :

(a) un capteur de couple (3) destiné à mesurer un couple de volant ($T_s$) du volant ;
(b) un capteur de vitesse angulaire (4) destiné à mesurer une vitesse angulaire ($\omega_c$) d'une colonne de direction reliée au volant ; et ayant
(c) une unité de calcul (5), qui calcule un couple de conducteur ($T_d$) exercé par le conducteur sur le volant en fonction du couple de volant ($T_s$) mesuré et de la vitesse angulaire ($\omega_c$) mesurée,

**caractérisé en ce que** l'unité de calcul (5) filtre le couple de conducteur ($T_d$) calculé pour déterminer une composante d'angle de direction $(\theta_C^T)$, laquelle est comparée à une valeur de seuil ($\theta_{tol}$), afin de reconnaître un guidage manuel du volant par le conducteur.

**2.** Dispositif selon la revendication 1,
dans lequel l'unité de calcul (5) présente un premier filtre (5A), lequel filtre le couple de volant ($T_s$) mesuré par le capteur de couple (3) pour déterminer une vitesse angulaire du capteur de couple (3).

**3.** Dispositif selon la revendication 2,
dans lequel l'unité de calcul (5) présente un calculateur (5B) qui ajoute la die vitesse angulaire déterminée du capteur de couple (3) à la vitesse angulaire ($\omega_c$) de la colonne de direction mesurée par le capteur de vitesse angulaire (4) pour générer une somme de vitesses angulaires.

**4.** Dispositif selon la revendication 3,
dans lequel l'unité de calcul (5) présente un deuxième filtre (5C), lequel filtre la somme de vitesses angulaires générée par le calculateur (5B) pour calculer le couple de conducteur ($T_d$) exercée par le conducteur sur le volant.

**5.** Dispositif selon la revendication 4,
dans lequel l'unité de calcul (5) présente un troisième filtre (5D), lequel filtre le couple de conducteur ($T_d$) pour déterminer une composante d'angle de direction $(\theta_C^T)$.

**6.** Dispositif selon la revendication 5,

dans lequel l'unité de calcul (5) présente un comparateur (5E) qui compare la composante d'angle de direction $(\theta_C^T)$ déterminée à la valeur de seuil $(\theta_{tol})$ pour reconnaître un guidage manuel du volant par le conducteur.

**7.** Dispositif selon l'une quelconque des revendications précédentes 4 à 6,
dans lequel les filtres (5A, 5C, 5D) de l'unité de calcul (5) sont des filtres passe-bas.

**8.** Dispositif selon la revendication 6,
dans lequel le comparateur (5E) de l'unité de calcul place (5) un drapeau (F), lequel indique si le volant est ou non guidé manuellement par le conducteur.

**9.** Dispositif selon la revendication 8,
dans lequel le drapeau (F) placé par le comparateur (5E) est évalué par une unité de commande pour avertir le conducteur et/ou pour interdire des interventions automatiques du véhicule.

**10.** Procédé destiné à détecter un guidage manuel d'un volant par un conducteur, comprenant les étapes suivantes consistant à :

(a) mesurer (S1) un couple de volant ($T_s$) du volant ;
(b) mesurer (S2) une vitesse angulaire ($\omega_c$) d'une colonne de direction reliée au volant ;
(c) calculer (S3) un couple de conducteur ($T_d$) exercé par le conducteur sur le volant en fonction du couple ($T_s$) mesuré et de la vitesse angulaire ($\omega_c$) mesurée de la colonne de direction reliée au volant ;

**caractérisé par** les étapes consistant à :

(d) filtrer (S4) le couple de conducteur ($T_d$) calculé pour déterminer une composante d'angle de direction $(\theta_C^T)$ produite par le couple de conducteur ($T_d$) ; et

(e) comparer (S5) la composante d'angle de direction $(\theta_C^T)$ déterminée à une valeur de seuil pour reconnaître si le volant est guidé manuellement par le conducteur.

**11.** Procédé selon la revendication 10,
dans lequel le couple de volant ($T_s$) mesuré par un capteur de couple (3) est filtré pour déterminer une vitesse angulaire du capteur de couple (3).

**12.** Procédé selon la revendication 11,
dans lequel la vitesse angulaire déterminée du capteur de couple (3) est ajoutée à la vitesse angulaire ($\omega_c$) mesurée de la colonne de direction reliée au volant pour générer une somme de vitesses angulaires.

**13.** Procédé selon la revendication 12,
dans lequel la somme de vitesses angulaires générée est filtrée pour calculer le couple de conducteur ($T_d$) exercé par le conducteur sur le volant.

**14.** Procédé selon la revendication 13,
dans lequel le couple de conducteur ($T_d$) est filtré pour déterminer une composante d'angle de direction $(\theta_C^T)$ .

**15.** Procédé selon la revendication 14,
dans lequel la composante d'angle de direction $(\theta_C^T)$ déterminée est comparée à une valeur de seuil $(\theta_{tol})$ pour reconnaître un guidage manuel du volant par le conducteur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007039332 A1